# EUROPÄISCHE PATENTSCHRIFT

(11) **EP 3 378 688 B1**
(45) Veröffentlichungstag und Bekanntmachung des Hinweises auf die Patenterteilung: **07.08.2019**
(21) Anmeldenummer: 17162529.6
(22) Anmeldetag: 23.03.2017
(51) Int. Cl.: B60J 10/70, B25B 27/00

(54) **MONTAGEVORRICHTUNG ZUR VERWENDUNG BEI EINER LEISTENANORDNUNG UND VERFAHREN ZUR DURCHFÜHRUNG BEI EINER LEISTENANORDNUNG**
MOUNTING DEVICE FOR USE IN AN EDGE STRIP ASSEMBLY AND METHOD FOR IMPLEMENTATION IN AN EDGE STRIP ASSEMBLY
DISPOSITIF DE MONTAGE À UTILISER POUR UN SYSTÈME DE BAGUETTES ET PROCÉDÉ D'EXÉCUTION POUR UN SYSTÈME DE BAGUETTES

(43) Veröffentlichungstag der Anmeldung: 26.09.2018
(73) Patentinhaber: Elkamet Kunststofftechnik GmbH, 35216 Biedenkopf (DE)
(72) Erfinder: ROTH, Hartmut, 35216 Biedenkopf (DE); BERGMANN, Lutz, 35630 Ehringshausen (DE); BURK, Carsten, 35232 Dautphetal (DE); HAIN, Christoph, 35236 Breidenbach (DE); HAIN, Marco, 35713 Eschenburg (DE); LANDECK, David, 35037 Marburg (DE); LÖHNERT, Jens, 35102 Lohra (DE); ORTMÜLLER, Michael, 35232 Dautpethal-Herzhausen (DE); SCHNEIDER, Marcus, 35232 Dautpethal (DE)
(74) Vertreter: DREISS Patentanwälte PartG mbB

(56) Entgegenhaltungen:
- EP-A1- 2 253 556
- EP-A2- 2 586 638
- WO-A2-2006/002891
- FR-A1- 3 020 994
- US-A- 3 744 113
- US-B1- 6 868 595

## Beschreibung

Die Erfindung betrifft eine Montagevorrichtung mit den Merkmalen des Oberbegriffs des Patentanspruch 1.

Aus dem Stand der Technik, beispielsweise aus der DE 200 08 555 U1 und der DE 20 2008 006 986 U1, bekannte Profilleisten dienen dazu, einen unteren Randbereich einer Windschutzscheibe eines Kraftfahrzeugs mit einem angrenzenden Kraftfahrzeugbauteil zu verbinden. Bei dem angrenzenden Kraftfahrzeugbauteil handelt es sich insbesondere um eine sogenannte Wasserkastenabdeckung, welche üblicherweise mit einem Verbindungsabschnitt der Profilleiste verrastet wird, indem ein Befestigungssteg der Wasserkastenabdeckung in einen Aufnahmebereich des Verbindungsabschnitts eingeführt und dort üblicherweise rastend befestigt wird. Eine Wasserkastenabdeckung dient zur Abdeckung eines Wasserkastens, der von der Fahrzeugscheibe abfließendes Wasser aufnimmt und kontrolliert in den Motorraum und unter das Fahrzeug ableitet. Der Wasserkasten kann Bestandteil der Fahrzeugkarosserie sein.

Die Profilleiste wird nach ihrer Herstellung mit dem Randbereich der Windschutzscheibe verbunden, üblicherweise verklebt. Dieser Montageschritt wird üblicherweise bei Zulieferern durchgeführt, sodass die Zulieferer einem Kraftfahrzeughersteller eine Baugruppe liefern können, welche die Windschutzscheibe und die mit der Windschutzscheibe verbundene Profilleiste umfasst. Diese Baugruppe wird dann im Rahmen einer Endmontage eines Kraftfahrzeugs mit einer Windschutzscheibenaufnahme einer Kraftfahrzeugkarosserie verbunden; außerdem wird das angrenzende Kraftfahrzeugbauteil mit der Profilleiste gefügt.

Während des Transports der vorstehend genannten Baugruppe von dem Zulieferer zu dem Kraftfahrzeughersteller steht der zur Verbindung mit dem angrenzenden Bauteil vorgesehene Verbindungsabschnitt der Profilleiste von der Windschutzscheibe ab und ist somit mechanischen Einflüssen ausgesetzt. Gleichzeitig ist es aber erwünscht, dass die Baugruppe platzsparend und "stehend" transportiert werden kann, dass also die Windschutzscheibe hochkant transportiert werden kann. Außerdem ist es erwünscht, dass die Windschutzscheibe während des Transports gegen eine Beschädigung des unteren Randbereichs geschützt ist. Ein solcher Schutz ist dadurch gewährleistet, dass sich die Windschutzscheibe während ihres Transports auf dem Verbindungsabschnitt der Profilleiste abstützt. Dies bedeutet aber, dass das Gewicht der Windschutzscheibe während des Transports der Baugruppe auf dem Verbindungsabschnitt der Profilleiste lastet. Diese Belastung bewirkt eine unerwünschte Verformung (Stauchung) des den Aufnahmebereich begrenzenden Verbindungsabschnitts der Profilleiste.

Zur Vermeidung einer Verformung einer mit einer Windschutzscheibe verbundenen Profilleiste ist es aus dem Stand der Technik (beispielsweise aus der WO 2006/002891 A2, der EP 2 253 556 A1 und der WO 2014/041279 A1) bekannt, den Verbindungsabschnitt der Profilleiste dadurch zu versteifen, dass eine Transportschutzleiste (auch "Keder" genannt) verwendet wird, die mit zumindest einem Teilbereich ihres Querschnitts in dem Aufnahmebereich des Verbindungsabschnitts angeordnet wird.

Nach Anlieferung der Baugruppe "Windschutzscheibe und Profilleiste" bei dem Kraftfahrzeughersteller wird die Transportschutzleiste wieder aus dem Aufnahmebereich der Profilleiste entfernt, damit der Verbindungsabschnitt mit dem angrenzenden Kraftfahrzeugbauteil, insbesondere mit der Wasserkastenabdeckung, verbunden werden kann. Die Transportschutzleiste wird anschließend entsorgt.

Zur Entfernung der Transportschutzleiste aus dem Aufnahmebereich des Verbindungsabschnitts der Profilleiste schlägt die EP 2 253 556 A1 vor, an der Transportschutzleiste einen zusätzlichen Handhabungsabschnitt in Form einer Grifflasche vorzusehen, sodass die Transportschutzleiste durch manuelles Ziehen an der Grifflasche aus dem Aufnahmebereich der Profilleiste herausgezogen werden kann. Ein ähnlicher Handhabungsabschnitt in Form eines Ausziehrings ist aus der WO 2014/041279 A1 bekannt.

Die vorstehend genannten, zusätzlichen Handhabungsabschnitte vereinfachen die Entfernung der Transportschutzleiste aus dem Aufnahmebereich der Profilleiste. Die Transportschutzleiste und die Handhabungsabschnitte müssen aber zunächst als Einzelteile hergestellt werden und dann vom Zulieferer an der Profilleiste montiert werden. Nach dem Transport der Baugruppe zu dem Kraftfahrzeughersteller muss der Kraftfahrzeughersteller die Transportschutzleiste und die Handhabungsabschnitte dann wieder demontieren. Schließlich müssen die Transportschutzleiste und die Handhabungsabschnitte gesammelt und entsorgt werden.

Aus der FR 3 020 994 A1 ist ein Handwerkzeug bekannt, das einen ringförmigen Griff und einen Schaft mit einem endseitig angeordneten Kugelkopf aufweist. Der Kugelkopf ist in den Aufnahmebereich einer Profilleiste einführbar, um durch Verschiebung des Kugelkopfs längs der Leistenanordnung eine in dem Aufnahmebereich vorhandene Kederleiste aus dem Aufnahmebereich zu entfernen.

Aus der US 3,774,113 A ist ein Montagewerkzeug zur Montage einer Gummieinsatzleiste in einen Aufnahmebereich einer Gummihauptleiste bekannt. Dieses Montagewerkzeug weist eine Öffnung zur Durchführung der Gummieinsatzleiste auf, die im Zuge einer Verschiebung des Werkzeugs längs der Gummihauptleiste nach und nach in den Aufnahmebereich eingeführt wird.

Aus der US 6,868,595 B1 ist ein Montage- und Demontagewerkzeug für Fahrzeugstoßleisten bekannt, die eine fahrzeugseitige Trägerleiste mit einem Aufnahmebereich für eine stoßabsorbierende Gummileiste aufweisen. Das Werkzeug erfasst einen Teil des Querschnitts der Gummileiste zwecks Einführung in den Aufnahmebereich der Trägerleiste oder zwecks Entfernung der Gummileiste aus der Trägerleiste.

Ausgehend von der FR 3 020 994 A1 liegt der vorliegenden Erfindung die Aufgabe zugrunde, eine Montagevorrichtung zur Verwendung bei einer Leistenanordnung und ein Verfahren zur Durchführung bei einer Leistenanordnung anzugeben, mit welchen bzw. welchem der im Zusammenhang mit der Handhabung der Transportschutzleiste entstehende Aufwand reduziert werden kann.

Diese Aufgabe wird bei einer Montagevorrichtung mit den Merkmalen des Oberbegriffs des Patentanspruchs 1 erfindungsgemäß durch eine Montagevorrichtung mit den kennzeichnenden Merkmalen des Patentanspruchs 1 gelöst.

Die erfindungsgemäße Montagevorrichtung weist zwei wesentliche Bereiche auf. Der Einführbereich dient dazu, das freie Ende der Leistenanordnung in die Montagevorrichtung einzuführen. Somit wird eine Relativpositionierung zwischen dem freien Ende der Leistenanordnung und dem Trennbereich, der zum Trennen der Transportschutzleiste von der Profilleiste ausgebildet ist, ermöglicht.

Die erfindungsgemäße Montagevorrichtung hat den Vorteil, dass (aus dem Stand der Technik bekannte) separate, an der Transportschutzleiste zu befestigende Handhabungsabschnitte entfallen können.

Die erfindungsgemäße Montagevorrichtung ist für eine Vielzahl von Leistenanordnungen wiederverwendbar. Nach Einführen des freien Endes der Leistenanordnung in den Einführbereich und Trennen der Transportschutzleiste von der Profilleiste kann die Montagevorrichtung wieder von den zumindest abschnittweise getrennten Bauteilen "Transportschutzleiste und Profilleiste" entfernt und für eine weitere Leistenanordnung verwendet werden. Die Montagevorrichtung kann also stationär in einer Fertigungsumgebung eines Zulieferers oder eines Kraftfahrzeugherstellers vorgehalten werden und muss nicht gemeinsam mit Fahrzeugscheiben und Leistenanordnungen "mittransportiert" werden.

Es ist bevorzugt, dass der Einführbereich ein zu dem Querschnitt der Leistenanordnung zumindest abschnittsweise komplementäres Einführprofil aufweist. Insbesondere ist die Leistenanordnung bezogen auf eine Längsachse der Leistenanordnung nur in einer Drehlage in den Einführbereich der Leistenanordnung einführbar.

Bei einer Ausführungsform der Erfindung ist das Einführprofil umfangsseitig geschlossen. Dies bedeutet, dass ein in den Einführbereich eingeführtes freies Ende der Leistenanordnung entlang seines kompletten Umfangs von Führungsabschnitten des Einführprofils umschlossen ist. Ein solches, in Umfangsrichtung geschlossenes Einführprofil ermöglicht eine besonders zuverlässige Relativpositionierung der Leistenanordnung und des Trennbereichs der Montagevorrichtung.

Bei einer alternativen Ausführungsform weist das Einführprofil eine Einführprofilöffnung auf, in welcher ein Randbereich einer Fensterscheibe anordenbar ist. Diese Ausführung hat den Vorteil, dass die Montagevorrichtung auch dann verwendet werden kann, um eine Transportschutzleiste von der Profilleiste zu trennen, wenn die Profilleiste bereits an einer Fensterscheibe befestigt ist.

Das Einführprofil ist vorzugsweise durch Wandabschnitte eines Gehäuses der Montagevorrichtung begrenzt. Ein solches Gehäuse kann beispielsweise aus einem Kunststoffmaterial hergestellt sein. Das Gehäuse kann Außenabmessungen aufweisen, die es ermöglichen, die Montagevorrichtung von Hand zu führen und als Handwerkzeug zu verwenden. Das Gehäuse kann zusätzlich oder alternativ hierzu auch Teil einer maschinellen Fertigungseinrichtung sein.

Das Einführprofil kann zumindest abschnittsweise durch reibungsmindernde Führungs- und/oder Antriebsabschnitte begrenzt sein. Beispielsweise können nicht angetriebene Laufrollen und/oder Antriebsrollen verwendet werden, die mit einer der Leistenanordnung zugewandten Lauffläche oder Antriebsfläche das Einführprofil mitbegrenzen.

Im Rahmen der Erfindung wird weiter vorgeschlagen, dass der Trennbereich eine Hebeeinrichtung mit einem Rampenabschnitt aufweist, der die Transportschutzleiste zumindest abschnittsweise untergreift und aus dem Aufnahmebereich der Profilleiste heraushebt. Ein solcher Rampenabschnitt hat den Vorteil, dass die zunächst noch in dem Aufnahmebereich der Profilleiste angeordnete Transportschutzleiste entlang ihrer Länge über den Rampenabschnitt gleiten kann und die Transportschutzleiste somit schonend, einfach und mit niedrigen Montagekräften von der Profilleiste abgelöst werden kann.

Der Rampenabschnitt kann beispielsweise durch einen Abschnitt eines oder des Gehäuses der Montagevorrichtung gebildet sein, wodurch eine besonders einfache und preisgünstige Montagevorrichtung geschaffen wird. Der Rampenabschnitt kann zusätzlich oder alternativ hierzu auch durch ein insbesondere klingenförmiges Zusatzelement gebildet sein. Ein solches Zusatzelement ist beispielsweise aus einem metallischen Material hergestellt und mit dem Gehäuse der Montagevorrichtung verbunden. Es ist möglich, die Verbindung zwischen Zusatzelement und Gehäuse dauerhaft und unlösbar auszubilden, beispielsweise indem ein metallisches Zusatzelement mit Kunststoffmaterial umformt wird. Es ist aber auch möglich, das Zusatzelement lösbar mit einem Gehäuse der Montagevorrichtung zu verbinden, um nach einem etwaigen Verschleiß des Zusatzelements ein Austauschzusatzelement an der Montagevorrichtung zu befestigen.

Ferner ist es bevorzugt, wenn die Montagevorrichtung einen Profilleisten-Ausführbereich und/oder einen Transportschutzleisten-Ausführbereich aufweist. Diese Führungsbereiche dienen dazu, bereits voneinander getrennte Abschnitte der Profilleiste bzw. der Transportschutzleiste so zu führen, dass die Profilleiste und/oder die Transportschutzleiste relativ zu der Montagevorrichtung eine definierte räumliche Lage einnehmen, um die weitere Handhabung der Leistenanordnung bzw. der voneinander getrennten Teile der Leistenanordnung zu vereinfachen.

Im Rahmen der Erfindung ist es möglich, dass der Profilleisten-Ausführbereich und/oder der Transportschutzleisten-Ausführbereich endseitig offen ist oder sind. Dies ermöglicht es, die Montagevorrichtung entlang der gesamten Länge der Leistenanordnung an der Leistenanordnung anzuwenden, um auf diese Weise die Transportschutzleiste entlang ihrer gesamten Länge von der Profilleiste abzutrennen.

Es ist auch möglich, dass der Profilleisten-Ausführbereich und/oder der Transportschutzleisten-Ausführbereich endseitig geschlossen ist oder sind. Auf diese Weise ist es möglich, eine Transportschutzleiste im Bereich eines freien Endes der Leistenanordnung von der Profilleiste abzutrennen, bis das freie Ende der Profilleiste und/oder das freie Ende der Transportschutzleiste in Anlage mit einem endseitigen Verschluss eines Ausführbereichs gelangt. Anschließend kann die Montagevorrichtung (in entgegengesetzter Richtung) wieder entfernt werden und die Transportschutzleiste dadurch von der Profilleiste vollständig abgetrennt werden, dass die Transportschutzleiste im Bereich ihres von der Profilleiste bereits abgetrennten Abschnitts manuell oder maschinell ergriffen und auch entlang der verbleibenden Länge von der Profilleiste abgetrennt wird.

Bei einer besonders bevorzugten Ausführungsform der Erfindung weist die Montagevorrichtung einen Zusammenführungsbereich zum Zusammenführen eines von dem Aufnahmebereich von der Profilleiste getrennten Abschnitts der Transportschutzleiste und der Profilleiste auf. Ein solcher Zusammenführungsbereich ermöglicht es, einen bereits von der Profilleiste abgetrennten Abschnitt der Transportschutzleiste wieder mit dem Aufnahmebereich der Profilleiste zu verbinden.

Zu diesem Zweck kann beispielsweise ein Eindrückabschnitt vorgesehen sein, der die Transportschutzleiste zumindest mit einem Teilbereich ihres Querschnitts in den Aufnahmebereich der Profilleiste hineindrückt.

Der Eindrückabschnitt kann durch einen Abschnitt des Gehäuses der Montagevorrichtung und/oder durch ein insbesondere block-oder rollenförmiges Zusatzelement gebildet sein.

Die Vorteile des Zusammenführens von Transportschutzleiste und Profilleiste werden weiter unten unter Bezugnahme auf erfindungsgemäße Verfahren erläutert.

Im Rahmen der Erfindung ist es möglich, dass die Montagevorrichtung ein einteiliges Gehäuse aufweist, welches besonders einfach handhabbar ist.

Die Montagevorrichtung kann auch ein mehrteiliges Gehäuse aufweisen, wobei das Gehäuse ein erstes Gehäuseteil umfasst, das zumindest den Einführbereich und den Trennbereich aufweist und ein zweites Gehäuseteil, welches zumindest einen vorstehend genannten Zusammenführungsbereich aufweist. Ein solcher mehrteiliger Gehäuseaufbau ermöglicht es, die beiden Funktionen "Trennen" und "Zusammenführen" von Profilleiste und Transportschutzleiste räumlich voneinander getrennt und in Längsrichtung der Leistenanordnung zueinander versetzt vorzuhalten.

Es ist möglich, dass die Gehäuseteile starr oder bewegbar miteinander verbunden sind. Eine starre Verbindung ermöglicht es, die Montagevorrichtung so zu handhaben, als wenn sie einteilig wäre. Wenn die Gehäuseteile bewegbar miteinander verbunden sind, ist besonders vorteilhaft, dass die Gehäuseteile bei Bewegung der Montagevorrichtung längs einer Leistenanordnung einer Krümmung der Leistenanordnung folgen können. Eine solche Krümmung kann vorgesehen sein, wenn die Profilleiste der Krümmung eines unteren Randbereichs einer Windschutzscheibe folgend einen entsprechend gekrümmten Verlauf aufweist.

Insbesondere für den Fall von bewegbar miteinander verbundenen Gehäuseteilen (aber auch für den Fall von starr miteinander verbundene Gehäuseteilen) kann ein Abstand zwischen der Ausgangsseite des ersten Gehäuseteils und einer hierzu benachbarten Eingangsseite des zweiten Gehäuseteils vorhanden sein. Dies bedeutet, dass auch ein Ausgang des Profilleisten-Ausführbereichs an dem ersten Gehäuseteil und ein Eingang eines in dem zweiten Gehäuseteil vorgesehenen Führungskanals für die Profilleiste sowie ein Ausgang des Transportschutzleisten-Ausführbereichs an dem ersten Gehäuseteil und ein Eingang eines in dem zweiten Gehäuseteil vorgesehenen Führungskanals für die Transportschutzleiste zueinander beabstandet sind. In diesem Fall ist es vorteilhaft, wenn die Führungskanäle an der Eingangsseite des zweiten Gehäuseteils trichterförmige Einführbereiche aufweisen.

Im Rahmen der Erfindung ist es möglich, dass die Montagevorrichtung manuell gehandhabt wird und mit Handkraft entlang zumindest eines Teils der Längserstreckung der Leistenanordnung bewegt wird und/oder dass eine Leistenanordnung von Hand durch die Montagevorrichtung (manuell gehalten oder an einem Träger befestigt) hindurchbewegt wird.

Es ist auch möglich, dass eine Antriebseinrichtung vorgesehen ist, die eine längs der Leistenanordnung gerichtete Relativbewegung zwischen einer Leistenanordnung und der Montagevorrichtung erzeugt. Dabei ist es möglich, die Montagevorrichtung längs einer feststehenden Leistenanordnung zu bewegen. Es ist auch möglich, die Leistenanordnung längs einer feststehenden Montagevorrichtung anzutreiben. Ferner können die vorstehend genannten Antriebsmöglichkeiten auch miteinander kombiniert werden.

Die Erfindung betrifft ferner ein Verfahren gemäß Patentanspruch 17.

Vorteile und Ausgestaltungen des erfindungsgemäßen Verfahrens wurden zum Teil bereits vorstehend unter Bezugnahme auf die erfindungsgemäße Montagevorrichtung beschrieben. Auf diese vorstehende Beschreibung wird daher Bezug genommen. Zusätzlich werden nachstehend weitere Vorteile und Ausgestaltungen des erfindungsgemäßen Verfahrens beschrieben.

Bei einem besonders bevorzugten Verfahren wird eine Montagevorrichtung verwendet, die einen Zusammenführungsbereich zum Zusammenführen von Transportschutzleiste und Profilleiste umfasst. Bei diesem Verfahren wird die Profilleiste entlang eines ersten Führungswegs geführt, der eine erste Länge aufweist. Ferner wird ein von der Profilleiste getrennter Abschnitt der Transportschutzleiste entlang eines zweiten Führungswegs geführt, der eine von der ersten Länge verschiedene zweite Länge aufweist. Außerdem werden im Ausgangszustand miteinander verbundene und dann voneinander getrennte Abschnitte der Transportschutzleiste und der Profilleiste wieder zusammengeführt, und die Transportschutzleiste wird in den Aufnahmebereich der Profilleiste eingedrückt. Dieses Verfahren ermöglicht es, einen bestimmten Ausgangszustand einer Leistenanordnung mit einer bestimmten Relativpositionierung von Transportschutzleiste und Profilleiste (bezogen auf die Längserstreckung der Leistenanordnung), zu ändern, und zwar dadurch, dass die Führungswege für die Profilleiste und für die Transportschutzleiste unterschiedlich lang sind. Ein Zusammenführen von voneinander getrennten Abschnitten von Transportschutzleiste und Profilleiste nach Durchlauf unterschiedlich langer Führungswege führt dazu, dass der genannte Ausgangszustand so verändert wird, dass ein bestimmter Abschnitt der Transportschutzleiste in Längsrichtung der Leistenanordnung gesehen und bezogen auf den Ausgangszustand in einer veränderten Position wieder mit der Profilleiste gefügt wird. Auf diese Weise ist es möglich, ausgehend von einem Ausgangszustand der Leistenanordnung die Transportschutzleiste relativ zu der Profilleiste in Längsrichtung um ein bestimmtes Längenmaß zu versetzen.

Es ist insbesondere bevorzugt, dass die zweite Länge (entspricht dem Führungsweg der Transportschutzleiste) größer ist als die erste Länge (entspricht dem Führungsweg der Profilleiste). Auf diese Weise ist es möglich, die im Verhältnis zu der Transportschutzleiste üblicherweise formstabilere Profilleiste entlang eines kürzeren Führungswegs zu führen und die üblicherweise weniger stabile und daher biegsamere Transportschutzleiste entlang des zweiten, längeren Führungswegs zu führen.

Ein längerer Führungsweg kann insbesondere im Verhältnis zu einem kürzeren Führungsweg eine stärkere Krümmung aufweisen. Im Idealfall ist der kürzere Führungsweg weitestgehend geradlinig oder aber weist lediglich eine Krümmung auf, die der Krümmung eines unteren Randbereichs einer angrenzenden Windschutzscheibe entspricht. Diese Krümmung verläuft parallel zu einer Ebene einer Fensterscheibe, an der die Profilleiste angeordnet oder anordenbar ist; die "stärkere Krümmung" des längeren Führungsweg verläuft vorzugsweise in einer zu der Ebene der Fensterscheibe geneigten oder senkrechten Richtung.

Besondere Vorteile ergeben sich, wenn die Leistenanordnung, die in den Einführbereich eingeführt wird, zueinander bündige Enden der Profilleiste und der Transportschutzleiste aufweist, und wenn diese Enden nach dem Eindrücken zumindest eines Teilbereichs des Querschnitts der Transportschutzleiste in den Aufnahmebereich der Profilleiste um ein Längenmaß versetzt sind, dass der Differenz der Längen der Führungswege entspricht.

Dies ermöglicht es, eine Leistenanordnung vorzusehen, welche zunächst miteinander bündige freie Enden aufweist. Ein solches bündiges Ende kann beispielsweise dadurch hergestellt werden, dass Profilleiste und Transportschutzleiste jeweils in einem Endlosverfahren (beispielsweise durch Extrusion) hergestellt und miteinander gefügt werden. Anschließend können diese Endlos-Leistenanordnungen beispielsweise mittels eines Schneidwerkzeugs so abgelängt werden, dass vereinzelte Leistenanordnungen entstehen, deren Längen der Länge eines unteren Randbereichs einer Windschutzscheibe entsprechen. Wenn nun eine solche vereinzelte Leistenanordnung wie vorstehend beschrieben so bearbeitet wird, dass die Transportschutzleiste zunächst abschnittsweise von der Profilleiste entfernt und anschließend voneinander getrennte Abschnitte wieder zusammengeführt werden, wobei sich die Länge der Führungswege von Profilleiste und Transportschutzleiste unterscheiden, wird aus der zueinander bündigen Anordnung der Enden von Profilleiste und Transportschutzleiste eine versetzte Anordnung der Enden von Profilleiste und Transportschutzleiste erzeugt, wobei das Längenmaß des Versatzes der freien Enden von Profilleiste und Transportschutzleiste der Differenz der Längen der Führungswege entspricht.

Beispielsweise ist es möglich, eine vereinzelte Leistenanordnung mit einer Profilleiste und einer daran befestigten Transportschutzleiste zu bearbeiten, wobei an beiden freien und voneinander abgewandten Enden der Leistenanordnung die jeweiligen Stirnflächen der Profilleiste und der Transportschutzleiste miteinander bündig sind. Nach Durchlauf des vorstehend erörterten Verfahrens und Anwendung der Montagevorrichtung entlang der gesamten Länge einer solchen Leistenanordnung ist die Stirnfläche eines ersten freien Endes der Transportschutzleiste in Längsrichtung der Leistenanordnung gesehen weiter in die Profilleiste hineinversetzt; das entgegengesetzte zweite freie Ende der Transportschutzleiste jedoch steht in Längsrichtung der Leistenanordnung gesehen über die benachbarte Stirnfläche der Profilleiste hervor. Eine solche Anordnung ermöglicht es immer noch, eine ausreichende Transportschutzwirkung bereitzustellen. Zu dem Zeitpunkt aber, zu dem die Transportschutzleiste von der Profilleiste entfernt werden soll, kann die Transportschutzleiste an ihrem freien Ende, welches über eines der freien Enden der Profilleiste hervorsteht, manuell oder maschinell ergriffen und durch einfaches Ziehen oder Anheben der Transportschutzleiste von der Profilleiste vollständig abgetrennt werden.

Das vorstehend erörterte Verfahren kann auch für vereinzelte Leistenanordnungen angewendet werden, bei denen die freien Enden der Profilleisten und der Transportschutzleiste nicht miteinander bündig sind, bei der also relativ zueinander um ein erstes Längenmaß versetzte Enden der Profilleiste und der Transportschutzleiste vorgesehen sind. Diese Enden sind nach dem Eindrücken zumindest eines Teilbereichs des Querschnitts der Transportschutzleiste in den Aufnahmebereich der Profilleiste um ein von dem ersten Längenmaß verschiedenes zweites Längenmaß versetzt, wobei der Betrag der Differenz zwischen dem ersten Längenmaß und dem zweiten Längenmaß der Differenz der Längen der Führungswege entspricht.

Die vorstehend beschriebenen Verfahren eignen sich besonders gut zur Verwendung in unmittelbarem Anschluss an die Herstellung einer Leistenanordnung. Dies hat den Vorteil, dass ein Zulieferer, der die Profilleiste herstellt (und/oder eine Baugruppe, umfassend eine Fensterscheibe und eine daran befestigte Profilleiste), die Profilleiste und/oder die Baugruppe bereits für einen Transportschutz vorbereiten kann, aber so, dass im Rahmen der Endmontage der Baugruppe beim Kraftfahrzeughersteller die aus dem Stand der Technik bekannten Handhabungsabschnitte nicht benötigt werden. Es ist bei der Endmontage eines Kraftfahrzeugs dann auch nicht erforderlich, die erfindungsgemäße Montagevorrichtung zu verwenden, weil dieser Montageschritt bereits durch den Zulieferer durchgeführt werden kann.

Demnach betrifft die Erfindung auch die Verwendung einer eingangs beschriebenen Montagevorrichtung zur Durchführung eines vorstehend beschriebenen Verfahrens.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine perspektivische Darstellung einer Ausführungsform einer Montagevorrichtung;
- Fig. 2: die Montagevorrichtung gemäß Fig. 1 in einem Teilschnitt;
- Fig. 3: die Montagevorrichtung gemäß Fig. 1 aus einer rückwärtigen Perspektive;
- Fig. 4: eine Anordnung mit der Montagevorrichtung gemäß Fig. 1 und mit einer an einem Randbereich einer Fensterscheibe eines Kraftfahrzeugs angeordneten Leistenanordnung, vor dem Einführen eines freien Endes der Leistenanordnung in einen Einführbereich der Montagevorrichtung;
- Fig. 5: die Anordnung gemäß Fig. 4 in einem Teilschnitt;
- Fig. 6: die Anordnung gemäß Fig. 4 aus einer rückwärtigen Perspektive;
- Fig. 7: die Anordnung gemäß Fig. 4, nach dem Einführen des freien Endes der Leistenanordnung in den Einführbereich der Montagevorrichtung und nach dem Trennen des freien Endes der Transportschutzleiste von der Profilleiste in einem Trennbereich der Montagevorrichtung;
- Fig. 8: die Anordnung gemäß Fig. 7 in einem Teilschnitt;
- Fig. 9: die Anordnung gemäß Fig. 7 aus einer rückwärtigen Perspektive;
- Fig. 10: eine weitere Ausführungsform einer Montagevorrichtung;
- Fig. 11: die Montagevorrichtung gemäß Fig. 10 aus einer um ca. 120° verdrehten Perspektive;
- Fig. 12: eine weitere Ausführungsform einer Ausführungsform einer Montagevorrichtung, mit einem umfangsseitig geschlossenen Einführbereich;
- Fig. 13: eine weitere Ausführungsform einer Ausführungsform einer Montagevorrichtung, mit einem umfangsseitig geschlossenen, trichterförmig ausgebildeten Einführbereich;
- Fig. 14: eine weitere Ausführungsform einer Ausführungsform einer Montagevorrichtung, mit einem Zusammenführungsbereich zum Zusammenführen eines von einem Aufnahmebereich der Profilleiste getrennten Abschnitts der Transportschutzleiste und der Profilleiste;
- Fig. 15: die Montagevorrichtung gemäß Fig. 14 in einem Teilschnitt;
- Fig. 16: eine Anordnung mit der Montagevorrichtung gemäß Fig. 14 und mit einer Leistenanordnung, vor dem Einführen eines freien Endes der Leistenanordnung in einen Einführbereich der Montagevorrichtung;
- Fig. 17: die Anordnung gemäß Fig. 16, nach dem Einführen des freien Endes der Leistenanordnung in den Einführbereich der Montagevorrichtung und nach dem Trennen des freien Endes der Transportschutzleiste von der Profilleiste in einem Trennbereich der Montagevorrichtung;
- Fig. 18: die Anordnung gemäß Fig. 16, vor dem Zusammenführen des von dem Aufnahmebereich der Profilleiste getrennten Abschnitts der Transportschutzleiste und der Profilleiste; und
- Fig. 19: einen Ausschnitt der Anordnung gemäß Fig. 16 in vergrößerter Darstellung, nach dem Zusammenführen des von dem Aufnahmebereich der Profilleiste getrennten Abschnitts der Transportschutzleiste und der Profilleiste.

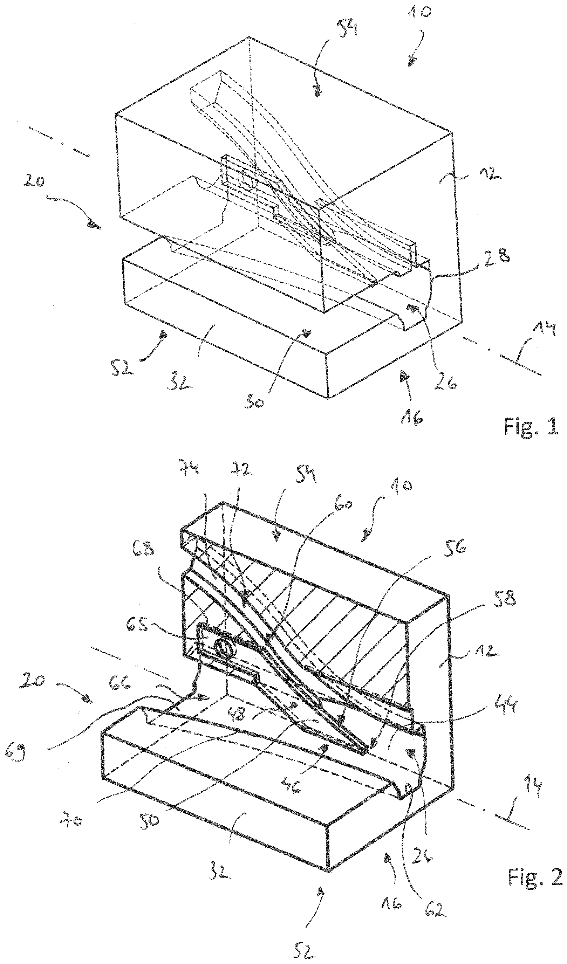

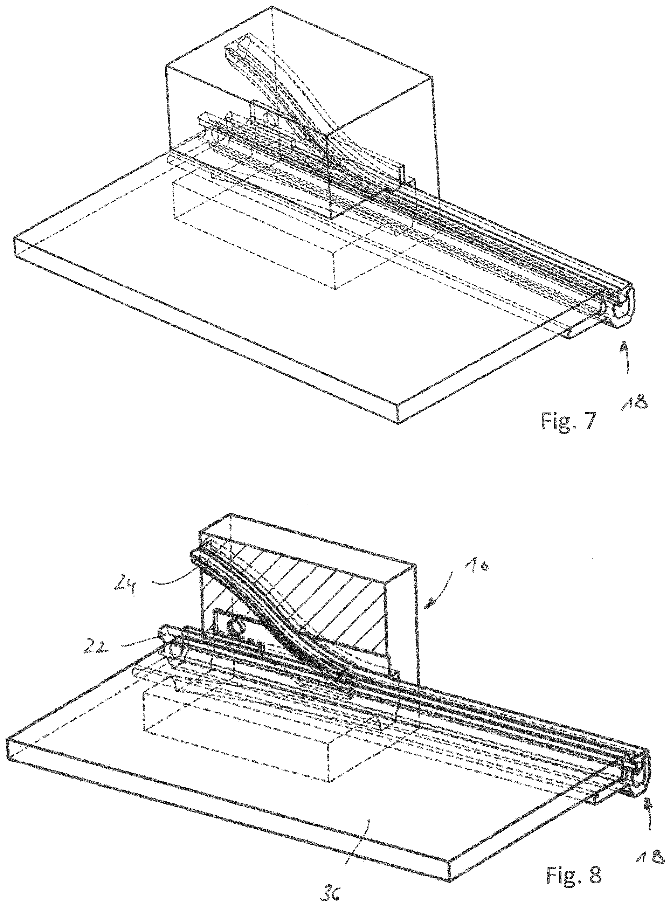

Eine Ausführungsform einer in den Figuren 1 bis 9 dargestellten Montagevorrichtung ist insgesamt mit dem Bezugszeichen 10 bezeichnet. Die Montagevorrichtung 10 weist ein einteiliges, blockförmiges Gehäuse 12 auf. Das Gehäuse 12 besteht beispielsweise aus einem Kunststoffmaterial, das in einem 3D-Druckverfahren schichtweise aufgetragen wird.

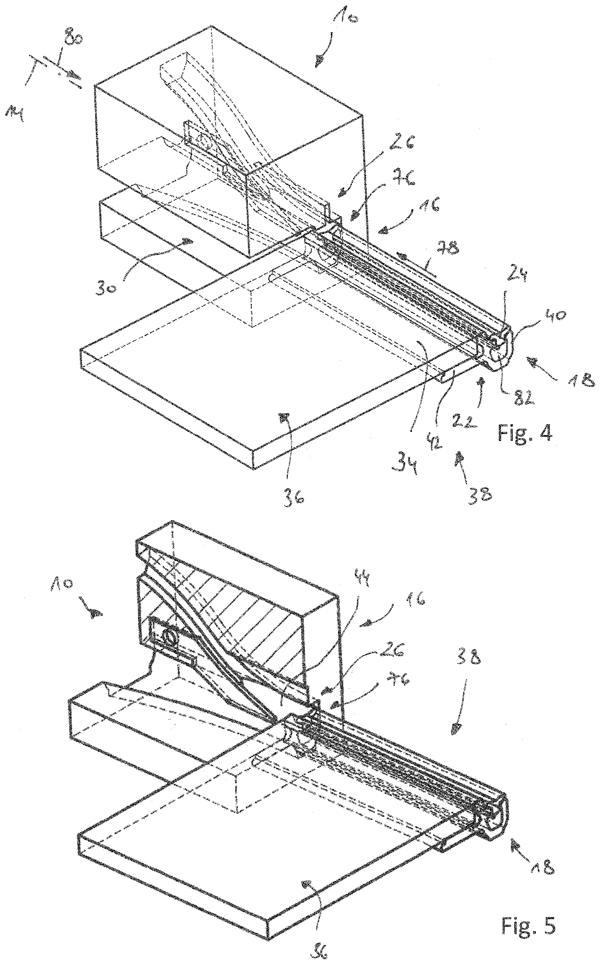

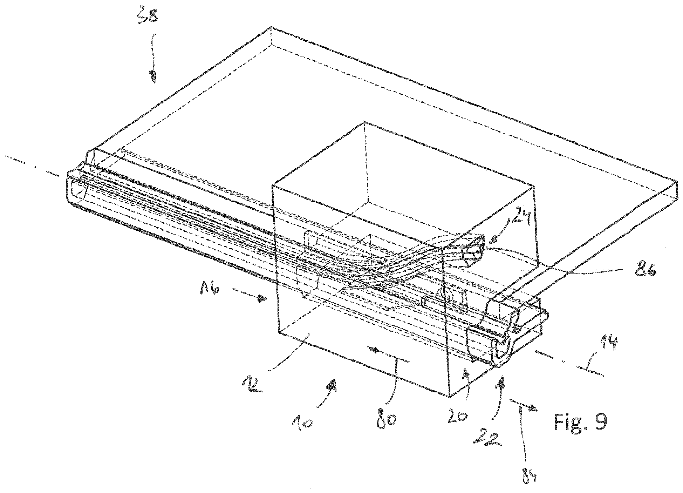

Das Gehäuse 12 erstreckt sich entlang einer Hauptachse 14 zwischen einer Eingangsseite 16, die zur Einführung einer beispielsweise in Figur 4 dargestellten Leistenanordnung 18 dient, und einer der Eingangsseite 16 abgewandten Ausgangsseite 20, an welcher eine Profilleiste 22 und eine Transportschutzleiste 24 der Leistenanordnung 18 in einem voneinander getrennten Zustand aus dem Gehäuse 12 der Montagevorrichtung 10 ausgeleitet werden (vgl. Figur 9).

An die Eingangsseite 16 angrenzend erstreckt sich von der Eingangsseite 16 ausgehend in das Innere des Gehäuses 12 hinein und entlang der Hauptachse 14 ein Einführbereich 26. Der Einführbereich 26 weist einen Querschnitt mit einem Einführprofil 28 auf, das entlang eines Umfangs des Einführprofils gesehen durch Wandabschnitte des Gehäuses 12 gebildet ist. Das Einführprofil 28 weist eine Einführprofilöffnung 30 auf, die sich entlang einer Seitenwand 32 des Gehäuses 12 erstreckt und zur Anordnung eines Randbereichs 34 einer Fensterscheibe 36 (vgl. Figur 4) dient. Die Seitenwand 32 erstreckt sich zwischen der Eingangsseite 16 und der Ausgangsseite 20.

Die Fensterscheibe 36 ist insbesondere die Windschutzscheibe eines Kraftfahrzeugs. Eine Gruppe von Bauteilen, welche die Fensterscheibe 36 sowie eine Leistenanordnung 22 mit einer Profilleiste 18 und einer Transportschutzleiste 24 umfasst, wobei die Profilleiste 18 vorzugsweise über Verklebung mit der Fensterscheibe 36 verbunden ist, wird nachfolgend und in der Zeichnung als Anordnung 38 bezeichnet.

Der Einführbereich 26 ist derart bemessen, dass das freie Ende einer Leistenanordnung 18, welche eine Profilleiste 22 und eine Transportschutzleiste 24 in ihrem miteinander gefügten Zustand umfasst, in den Einführbereich 26 einführbar ist, und zwar im Wesentlichen entlang einer zu der Hauptachse 14 des Gehäuses 12 parallelen Richtung.

Die Profilleiste 22 weist einen U-förmigen Aufnahmebereich 40 (vgl. Figur 4) auf, in welchem die Transportschutzleiste 24 zumindest mit einem Teilbereich des Querschnitts der Transportschutzleiste 24 aufgenommen ist. Eine lösbare Verbindung zwischen der Profilleiste 22 und der Transportschutzleiste 24 ist vorzugsweise eine Rast- oder Klemmverbindung.

Die Profilleiste 22 weist einen von dem Aufnahmebereich 40 abragenden Befestigungsabschnitt 42 auf, der bei Anordnung der Profilleiste 22 an einer Fensterscheibe 36 zur Verklebung mit der Fensterscheibe 36 dient.

Bei Anordnung der Leistenanordnung 18 in dem Einführbereich 26 der Montagevorrichtung sind der Befestigungsabschnitt 42 der Profilleiste 22 und der Randbereich 34 der Fensterscheibe 36 in der Einführprofilöffnung 30 anordenbar; der Aufnahmebereich 40 der Profilleiste 22 und die Transportschutzleiste 24 sind in einem Einführkanal 44 (vgl. Figur 2) des Einführbereichs 26 anordenbar.

Der Einführkanal 44 grenzt auf einer der Eingangsseite 16 abgewandten Seite an einen insgesamt mit dem Bezugszeichen 46 bezeichneten Trennbereich.

Der Trennbereich 46 weist eine Hebeeinrichtung 48 auf, die durch ein klingenförmiges Zusatzelement 50 gebildet ist. Das Zusatzelement 50 erstreckt sich in einer gedachten vertikalen Ebene, die zwischen einer Unterseite 52 und einer Oberseite 54 des Gehäuses 12 verläuft. Das Zusatzelement 50 ist in einer zu der Hauptachse 14 parallelen Richtung orientiert und weist, der Oberseite 54 des Gehäuses 12 zugewandt, einen Rampenabschnitt 56 auf, der sich zwischen einem Anfangsbereich 58 und einem Endbereich 60 erstreckt. Der Anfangsbereich 58 des Rampenabschnitts 56 weist den kleinsten Abstand zu einer der Unterseite 52 benachbarten Begrenzung 62 des Einführkanals 44 auf; der Endbereich 60 ist zu der Begrenzung 62 maximal beabstandet.

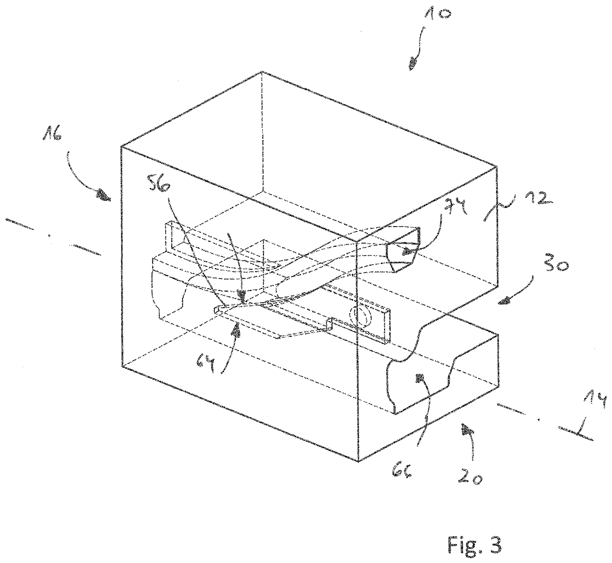

Der Anfangsbereich 58 ist zu der Eingangsseite 16 weniger beabstandet als der Endbereich 60. Zwischen dem Rampenabschnitt 56 und einer gedachten, zu der Hauptachse 14 parallelen, horizontalen Ebene zwischen der Unterseite 52 und der Oberseite 54 ist ein Winkel 64 (vgl. Figur 3) ausgebildet, der vorzugsweise zwischen ungefähr 5° und 85°, insbesondere zwischen ungefähr 15° und 45°, beträgt.

Das Zusatzelement 50 weist einen Befestigungsabschnitt 65 auf, der in einer komplementären Aufnahme 68 des Gehäuses 12 angeordnet und dort befestigt ist, beispielsweise durch Umformung mit Kunststoffmaterial.

Von dem Trennbereich 46 ausgehend schließt sich auf der dem Einführbereich 26 abgewandten Seite und entlang der Hauptachse 14 gesehen ein Profilleisten-Ausführbereich 66 an, dessen bodenseitige Begrenzung 69 stufenlos in die bodenseitige Begrenzung 62 des Einführbereichs 26 übergeht. Eine seitliche Begrenzung 70 des Einführkanals 44 und des Profilleisten-Ausführbereichs 66 erstreckt sich zwischen der Eingangsseite 16 und der Ausgangsseite 20 und weist einen gekrümmten Verlauf auf, wodurch es ermöglicht wird, auch Leistenanordnungen 18 mit gekrümmten Profilleisten 22 in den Einführbereich 26 einzuführen und die Profilleiste 22 aus dem Profilleisten-Ausführbereich 66 auszuführen.

Oberhalb des Rampenabschnitts 56 ist in dem Gehäuse 12 ein von dem Profilleisten-Ausführbereich 66 getrennter Transportschutzleisten-Ausführbereich 72 ausgebildet. Der Bereich 72 umfasst einen in den Einführkanal 44 hineinragenden und sich oberhalb des Rampenabschnitts 56 erstreckenden Kanal 74. Der Kanal 74 weist eine Neigung auf, welche zumindest in einem an den Trennbereich 46 angrenzenden Abschnitt zumindest im Wesentlichen der Neigung des Rampenabschnitts 56 entspricht.

Die Ausführbereiche 66 und 72 sind endseitig, also an der Ausgangsseite 20, offen, vgl. Figur 3.

In den Figuren 4 bis 6 ist eine Anordnung 38 mit einer Fensterscheibe 36 und einer damit verbundenen Leistenanordnung 18 dargestellt. Ein freies Ende der Leistenanordnung 18 ist mit dem Bezugszeichen 76 bezeichnet. Zur Trennung der Transportschutzleiste 24 von der Profilleiste 22 wird das freie Ende 76 der Leistenanordnung 18 benachbart zur Eingangsseite 16 positioniert. Anschließend wird das freie Ende 76 der Leistenanordnung 18 in den Einführbereich 26 eingeführt. Dieser Einführvorgang kann damit einhergehen, dass die Anordnung 38, oder zumindest die Leistenanordnung 18, in einer zu der Hauptachse 14 der Montagevorrichtung 10 parallelen Richtung 78 in den Einführbereich 26 hineinbewegt wird und/oder dass die Montagevorrichtung 10 in einer zu der Hauptachse 14 parallelen Richtung 80 in Richtung auf das freie Ende 76 der Leistenanordnung 18 bewegt wird, vgl. Figur 4. In jedem Fall findet eine Relativbewegung parallel zur Hauptachse 14 zwischen der Montagevorrichtung 10 und der Leistenanordnung 18 statt.

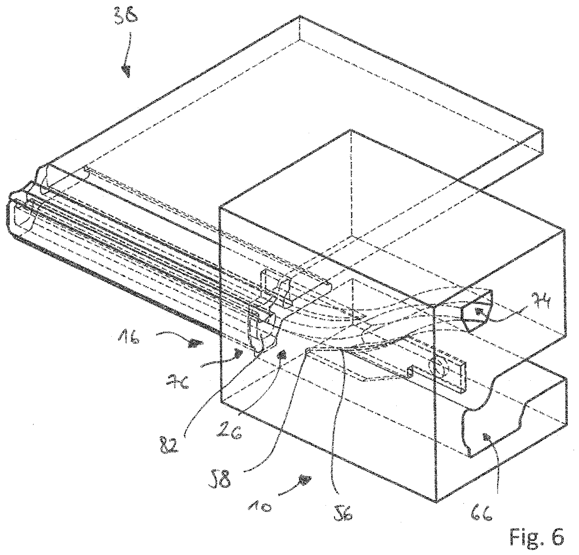

Nach Einführung des freien Endes 76 der Leistenanordnung 18 in den Einführkanal 44 (vgl. Figur 5) gelangt der Anfangsbereich 58 des Rampenabschnitts 56 in Eingriff mit einem Bereich 82 zwischen der Unterseite der Transportschutzleiste 24 und einer Innenseite des Aufnahmebereichs 40 der Profilleiste 22, vgl. Figuren 4 und 6.

Eine weitere Relativbewegung zwischen Montagevorrichtung 10 und Leistenanordnung 18 entlang der Hauptachse 14 bewirkt, dass der Rampenabschnitt 56 die Unterseite der Transportschutzleiste 24 untergreift und, der Neigung des Rampenabschnitts 56 entsprechend, die Transportschutzleiste 24 aus dem Aufnahmebereich 40 heraushebt. Dies hat zur Folge, dass eine weitere Relativbewegung zwischen der Leistenanordnung 18 und der Montagevorrichtung 10 in einer zu der Hauptachse 14 parallelen Richtung bewirkt, dass die Profilleiste 22 von dem Einführbereich 26 ausgehend in den Profilleisten-Ausführbereich 66 hinein und durch diesen hindurchgeführt wird. Diese Bewegung der Profilleiste 22 wird von der Hebeeinrichtung 48 nicht behindert, da das Zusatzelement 50 - in einer Querschnittsebene gesehen, die senkrecht zu der Relativbewegung 78 oder 80 verläuft - innerhalb des U-förmigen Aufnahmebereichs 40 angeordnet ist. Somit können sich der Aufnahmebereich 40 und das Zusatzelement 50 relativ zueinander bewegen, ohne miteinander zu kollidieren.

Die Transportschutzleiste 24 hingegen gleitet mit ihrer Unterseite auf dem Rampenabschnitt 56 entlang und folgt dem Verlauf des Kanals 74, sodass sie auf der Ausgangsseite 20 der Montagevorrichtung 10 zu der Profilleiste 22 beabstandet aus der Montagevorrichtung 10 herausgeführt wird, vgl. Figur 9.

Ausgehend von dem Zustand gemäß Figur 9 ist es möglich, die Transportschutzleiste 24 entlang ihrer gesamten Länge von der Profilleiste 22 zu trennen, beispielsweise indem die Montagevorrichtung 10 entsprechend einer in Figur 9 dargestellten Richtung 80 parallel zu der Hauptachse 14 entlang der gesamten Länge der Profilleiste 22 bewegt wird.

Alternativ hierzu ist es aber auch möglich, die Montagevorrichtung 10 in einer entgegengesetzten Richtung 84 parallel zu der Hauptachse 14 zu bewegen, sodass die Montagevorrichtung 10 wieder von der Anordnung 38 getrennt wird. Nach Abschluss dieser Trennung verbleibt ein von der Profilleiste 22 abgetrennter Abschnitt 86 der Transportschutzleiste 24 in einem von der Profilleiste 22 abgetrennten Zustand. Der Abschnitt 86 kann dann beispielsweise von Hand oder maschinell ergriffen werden, um die gesamte Transportschutzleiste 24 von der Profilleiste 22 zu trennen. Bei dieser Art der Verwendung kann es vorteilhaft sein, wenn das Einführprofil 28 und der Einführkanal 44 gegenüber der in den Figuren 1 bis 9 dargestellten Ausführungsform größere lichte Höhen aufweisen, damit der abgetrennte Abschnitt 86 der Transportschutzleiste 24 bei der Bewegung der Montagevorrichtung 10 in der entgegengesetzten Richtung 84 möglichst wenig in Richtung auf die Profilleiste 22 zu zurückbewegt wird.

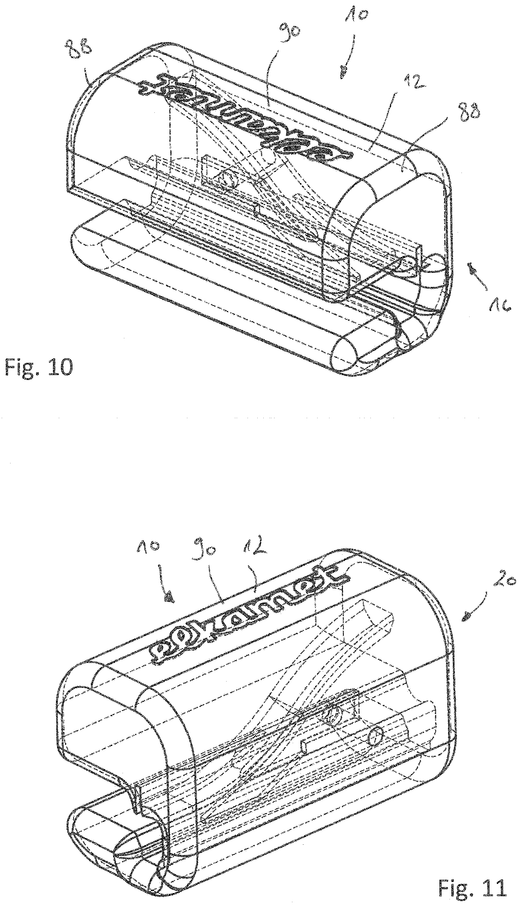

Die Montagevorrichtung 10 kann als Handwerkzeug ausgebildet sein. Zu diesem Zweck ist es vorteilhaft, wenn das Gehäuse 12 der Montagevorrichtung abgerundete Kanten 88 aufweist, insbesondere im Übergang zwischen der Eingangsseite 16 und Verbindungsflächen 90 und der Ausgangsseite 20 und den Verbindungsflächen 90, vgl. Figuren 10 und 11.

Im Übrigen entsprechen der Aufbau und die Funktionsweise der Montagevorrichtung 10 gemäß Figuren 10 und 11 dem Aufbau und der Funktionsweise der Montagevorrichtung gemäß Figuren 1 bis 9. Es wird daher auf die vorstehende Beschreibung Bezug genommen.

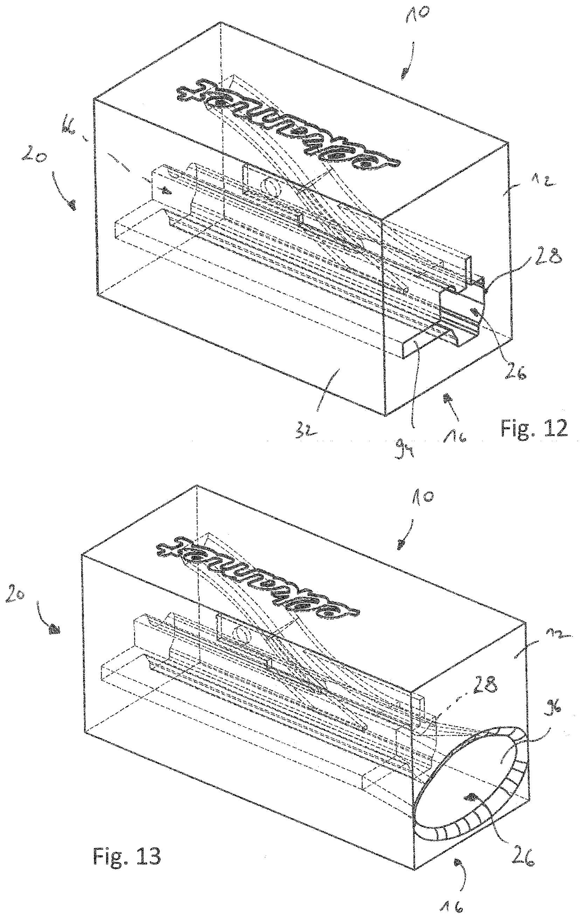

Diese Bezugnahme gilt auch für die weiteren Ausführungsformen von Montagevorrichtungen 10 gemäß Figuren 12 und 13. Die Montagevorrichtung gemäß Figur 12 unterscheidet sich von der Montagevorrichtung 10 gemäß Figuren 1 bis 9 dadurch, dass das Einführprofil 28 umfangsseitig geschlossen ist, die Seitenwand 32 also keine Einführprofilöffnung 30 aufweist (vgl. Figur 1). Dies bedeutet, dass ein Abschnitt 94 des Einführbereichs 26 in Richtung auf die Seitenwand 32 hin geschlossen ist und somit ein insgesamt umfangsseitig geschlossenes Einführprofil 28 bereitgestellt wird. Das in Umfangsrichtung geschlossene Einführprofil 28 geht, wie vorstehend unter Bezugnahme auf Figuren 1 bis 9 beschrieben, in einen Profilleisten-Ausführbereich 66 über, der an der Ausgangsseite 20 ebenfalls umfangsseitig geschlossen ist.

Die in Figur 12 dargestellte Ausführung einer Montagevorrichtung 10 mit einem umfangsseitig geschlossenen Einführprofil 28 dient zur Verwendung bei einer Leistenanordnung 18, welche (noch) nicht mit einer Fensterscheibe 36 verbunden ist. Hierbei ist der Befestigungsabschnitt 42 (vgl. Figur 4) der Profilleiste 22 in dem Abschnitt 94 angeordnet. Im Übrigen wird auf die vorstehende Beschreibung zu Figuren 1 bis 9 Bezug genommen.

Eine Montagevorrichtung 10 gemäß Figur 13 weist einen Einführbereich 26 mit einem trichterförmigen Einführabschnitt 96 auf, welcher sich ausgehend von der Eingangsseite 16 in das Gehäuse 12 der Montagevorrichtung 10 hinein erstreckt bis hin zu dem Einführprofil 28, das komplementär zu dem Querschnitt der Leistenanordnung 18 ausgebildet ist.

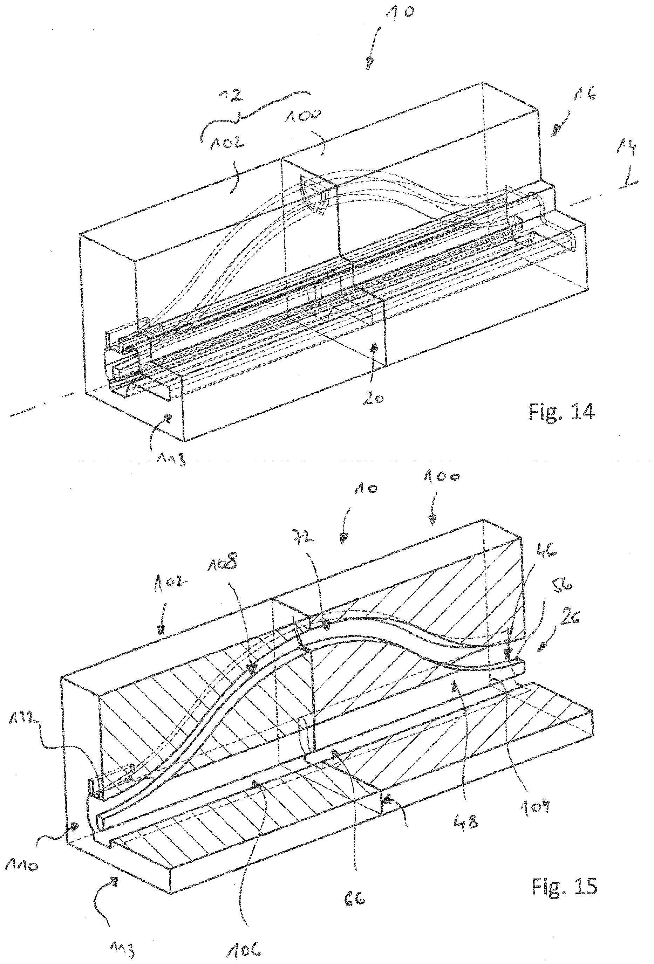

Eine in den Figuren 14 bis 19 dargestellte Montagevorrichtung 10 weist ein mehrteiliges Gehäuse 12 mit einem ersten Gehäuseteil 100 und mit einem zweiten Gehäuseteil 102 auf. Die Gehäuseteile 100 und 102 sind starr miteinander verbunden, beispielsweise miteinander verklebt. Es ist aber möglich, dass die nachfolgend beschriebene Montagevorrichtung 10 ein nur einteiliges Gehäuse 12 aufweist.

Ein erstes Gehäuseteil 100 der Montagevorrichtung 10 gemäß Figuren 14 bis 19 erstreckt sich zwischen einer Eingangsseite 16 und einer Ausgangsseite 20 längs einer Hauptachse 14. Das Gehäuseteil 100 weist einen Einführbereich 26 und einen Trennbereich 46 auf. Eine Hebeeinrichtung 48 des Trennbereichs 46 ist abweichend von den vorstehend beschriebenen Ausführungsformen durch einen Materialabschnitt 104 des Gehäuseteils 100 gebildet, kann aber zusätzlich oder alternativ hierzu auch durch ein Zusatzelement 50 gebildet sein. Der Materialabschnitt 104 weist ebenfalls einen Rampenabschnitt 56 auf.

In dem ersten Gehäuseteil 100 sind, vergleichbar zur Montagevorrichtung 10 gemäß Figuren 1 bis 9, ein Profilleisten-Ausführbereich 66 und ein Transportschutzleisten-Ausführbereich 72 vorgesehen, die an der Ausgangsseite 20 des ersten Gehäuseteils 100 münden. Dort gehen diese Bereiche in Führungskanäle 106 für die Profilleiste 22 und 108 für die Transportschutzleiste 24 über. Die Führungskanäle 106, 108 sind in dem zweiten Gehäuseteil 102 angeordnet.

Insbesondere für den (in der Zeichnung nicht dargestellten) Fall von bewegbar miteinander verbundenen Gehäuseteilen 100, 102 (aber auch für den in der Zeichnung dargestellten Fall von starr miteinander verbundenen Gehäuseteilen 100, 102) kann ein Abstand zwischen der Ausgangsseite 20 des ersten Gehäuseteils 100 und einer hierzu benachbarten Eingangsseite des zweiten Gehäuseteils 102 vorhanden sein. Dies bedeutet, dass auch der Ausgang des Profilleisten-Ausführbereichs 66 und ein Eingang des Führungskanals 106 sowie ein Ausgang des Transportschutzleisten-Ausführbereichs 72 und ein Eingang des Führungskanals 108 zueinander beabstandet sind. Insbesondere in diesem Fall ist es vorteilhaft, wenn die Führungskanäle 106, 108 trichterförmige Einführbereiche aufweisen.

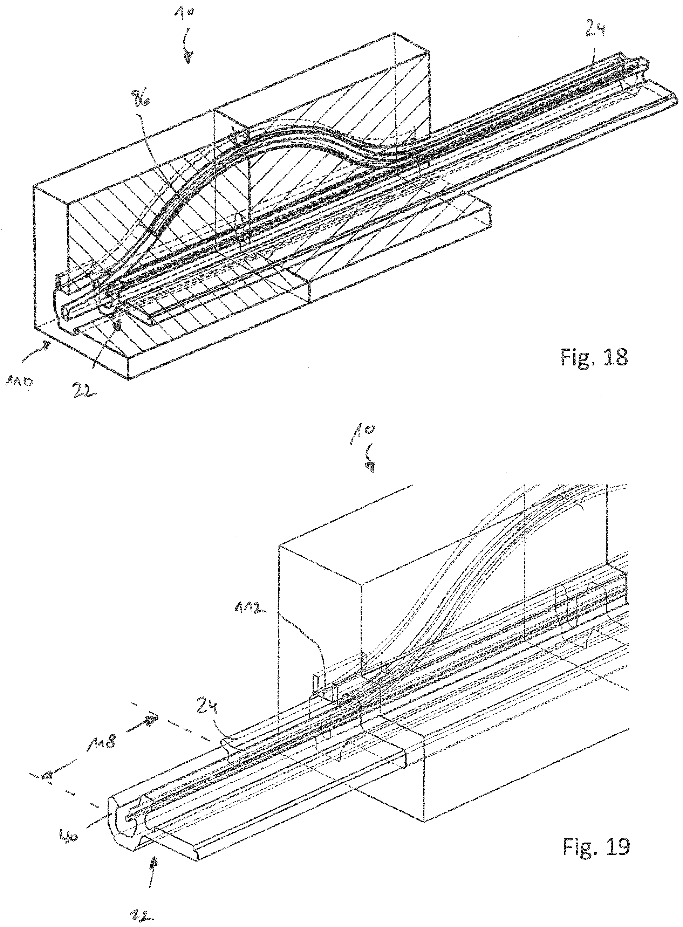

Unabhängig von einer etwaigen Beabstandung der Gehäuseteile 100, 102 münden die Führungskanäle 106, 108 des zweiten Gehäuseteils 102 in einem Zusammenführungsbereich 110, der dazu dient, vormals voneinander getrennte Abschnitte der Transportschutzleiste 24 und der Profilleiste 22 wieder miteinander zu verbinden. Zu diesem Zweck ist in dem Zusammenführungsbereich ein Eindrückabschnitt 112 vorgesehen, der mit einer Oberseite der Transportschutzleiste 24 zusammenwirkt und die Transportschutzleiste 24 von ihrer Oberseite her in den Aufnahmebereich 40 der Profilleiste 22 eindrückt, vgl. Figur 19.

Der Zusammenführungsbereich 110 grenzt an eine dem ersten Gehäuseteil 100 abgewandte Ausgangsseite 113 des zweiten Gehäuseteils 102.

Der Eindrückabschnitt 112 ist integraler Bestandteil des Gehäusematerials des zweiten Gehäuseteils 102 und geht übergangslos in die obere Begrenzung des Führungskanals 108 über. Der Eindrückabschnitt 112 kann aber auch durch ein (nicht dargestelltes) separates Zusatzelement, beispielsweise einen metallischen Eindrückblock oder eine Eindrückrolle, gebildet sein.

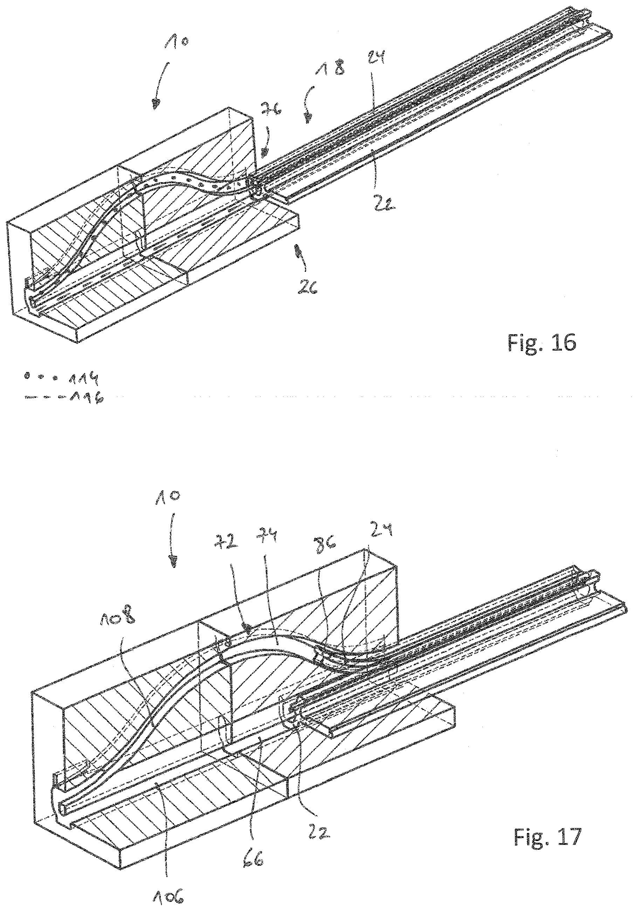

In den Figuren 16 bis 19 ist dargestellt, wie ein freies Ende 76 einer Leistenanordnung 18 in den Einführbereich 26 eingeführt wird (ein Ausgangszustand ist in Figur 16 dargestellt). Anschließend wird ein Abschnitt 86 der Transportschutzleiste 24 in vorstehend unter Bezugnahme auf Figuren 1 bis 9 beschriebener Art und Weise von der Profilleiste 22 getrennt (vgl. Figur 17).

Anschließend werden die voneinander getrennten Abschnitte der Profilleiste 22 und der Transportschutzleiste 24 entlang der Ausführbereiche 66 bzw. 72 und der Führungskanäle 106 bzw. 108 (vgl. Figuren 17 und 18) geführt, bis sie in dem Zusammenführungsbereich 110 wieder miteinander verbunden werden, indem der Eindrückabschnitt 112 auf ein oberes Ende der Transportschutzleiste 24 drückt und somit ein unteres Ende der Transportschutzleiste 24 in den U-förmigen Aufnahmebereich 40 der Profilleiste 22 hineingedrängt wird.

Aus dem Vergleich der Figuren 16 und 19 ist gut erkennbar, dass das in den Einführbereich 26 eingeführte freie Ende 76 der Leistenanordnung 18 miteinander bündige Enden von Stirnflächen der Transportschutzleiste 24 und der Profilleiste 22 aufweist. Nach Trennung des Abschnitts 86 der Transportschutzleiste 24 in dem Trennbereich 46 von der Profilleiste 22 durchläuft der Abschnitt 86 der Transportschutzleiste 24 einen in Figur 16 mit Punkten gekennzeichneten Führungsweg 114, während die Profilleiste 22 einen in Figur 16 gestrichelt dargestellten Führungsweg 116 durchläuft. Der Führungsweg 116 wird im Rahmen der vorliegenden Erfindung als "erster Führungsweg" bezeichnet, der Führungsweg 114 als "zweiter Führungsweg". Es ist gut zu erkennen, dass der erste Führungsweg 116 weitestgehend geradlinig verläuft, während der zweite Führungsweg 114 einen gekrümmten Verlauf aufweist und somit insgesamt länger ist als der erste Führungsweg 116. Dies hat zur Folge, dass eine Zusammenführung von vormals getrennten Abschnitten von Transportschutzleiste und Profilleiste 22 bezogen auf die ursprünglich bündige Anordnung der freien Enden (vgl. Figur 16) mit einem in Figur 19 dargestellten Versatz mit einem Längenmaß 118 erfolgt. Das Längenmaß 118 zwischen freien Enden der Transportschutzleiste 24 und der Profilleiste 22 entspricht der Differenz der Längen der Führungswege 114 und 116.

## Patentansprüche

1. Montagevorrichtung (10) zur Verwendung bei einer Leistenanordnung (18), welche eine an einem Randbereich (34) einer Fensterscheibe (36) eines Kraftfahrzeugs anordenbare oder angeordnete Profilleiste (22) und eine Transportschutzleiste (24) umfasst, wobei die Transportschutzleiste (24) zumindest mit einem Teilbereich ihres Querschnitts in einem Aufnahmebereich (40) der Profilleiste (22) angeordnet ist, **dadurch gekennzeichnet, dass** die Montagevorrichtung (10) einen Einführbereich (26) zur Einführung eines freien Endes (76) der die Profilleiste (22) und die Transportschutzleiste (24) umfassenden Leistenanordnung (18) in die Montagevorrichtung (10), und einen Trennbereich (46) zum Trennen der Transportschutzleiste (24) von der Profilleiste (22) aufweist, wobei der Einführbereich (26) eine Relativpositionierung zwischen dem freien Ende (76) der Leistenanordnung (18) und dem Trennbereich (46) ermöglicht.

2. Montagevorrichtung (10) nach Anspruch 1, **dadurch gekennzeichnet, dass** der Einführbereich (26) ein zu dem Querschnitt der Leistenanordnung (18) zumindest abschnittsweise komplementäres Einführprofil (28) aufweist.

3. Montagevorrichtung (10) nach Anspruch 2, **dadurch gekennzeichnet, dass** das Einführprofil (28) umfangsseitig geschlossen ist oder eine Einführprofilöffnung (30) aufweist, in welcher der Randbereich (34) der Fensterscheibe (36) anordenbar ist.

4. Montagevorrichtung (10) nach Anspruch 2 oder 3, **dadurch gekennzeichnet, dass** das Einführprofil (28) durch Wandabschnitte eines Gehäuses (12) der Montagevorrichtung (10) und/oder durch vorzugsweise reibungsmindernde Führungs- und/oder Antriebsabschnitte begrenzt ist.

5. Montagevorrichtung (10) nach einem der voranstehenden Ansprüche, **dadurch gekennzeichnet, dass** der Trennbereich (46) eine Hebeeinrichtung (48) mit einem Rampenabschnitt (56) aufweist, der die Transportschutzleiste (24) zumindest abschnittsweise untergreift und aus dem Aufnahmebereich (40) der Profilleiste (22) heraushebt.

6. Montagevorrichtung (10) nach Anspruch 5, **dadurch gekennzeichnet, dass** der Rampenabschnitt (56) durch einen Abschnitt (104) eines oder des Gehäuses (12) der Montagevorrichtung und/oder durch ein insbesondere klingenförmiges Zusatzelement (50) gebildet ist.

7. Montagevorrichtung (10) nach einem der voranstehenden Ansprüche, **gekennzeichnet durch** einen Profilleisten-Ausführbereich (66) und/oder durch einen Transportschutzleisten-Ausführbereich (72).

8. Montagevorrichtung (10) nach Anspruch 7, **dadurch gekennzeichnet, dass** der Profilleisten-Ausführbereich (66) und/oder der Transportschutzleisten-Ausführbereich (72) endseitig offen ist oder sind.

9. Montagevorrichtung (10) nach einem der voranstehenden Ansprüche, **dadurch gekennzeichnet, dass** der Profilleisten-Ausführbereich (66) und/oder der Transportschutzleisten-Ausführbereich (72) endseitig geschlossen ist oder sind.

10. Montagevorrichtung (10) nach einem der Ansprüche 1 bis 9, aufweisend einen Zusammenführungsbereich (110) zum Zusammenführen eines von dem Aufnahmebereich (40) der Profilleiste (22) getrennten Abschnitts (86) der Transportschutzleiste (24) und der Profilleiste (22).

11. Montagevorrichtung (10) nach Anspruch 10, **dadurch gekennzeichnet, dass** in dem Zusammenführungsbereich (110) ein Eindrückabschnitt (112) vorgesehen ist, der die Transportschutzleiste (24) zumindest mit einem Teilbereich ihres Querschnitts in den Aufnahmebereich (40) der Profilleiste (22) hineindrückt.

12. Montagevorrichtung (10) nach Anspruch 11, **dadurch gekennzeichnet, dass** der Eindrückabschnitt (112) durch einen Abschnitt eines Gehäuses (12) der Montagevorrichtung (10) und/oder durch ein insbesondere block- oder rollenförmiges Zusatzelement gebildet ist.

13. Montagevorrichtung (10) nach einem der voranstehenden Ansprüche, **dadurch gekennzeichnet, dass** die Montagevorrichtung ein einteiliges Gehäuse (12) aufweist.

14. Montagevorrichtung (10) nach einem der Ansprüche 1 bis 12, **dadurch gekennzeichnet, dass** die Montagevorrichtung (10) ein mehrteiliges Gehäuse (12) aufweist, wobei das Gehäuse (12) ein erstes Gehäuseteil (100) umfasst, das zumindest den Einführbereich (26) und den Trennbereich (46) aufweist, und ein zweites Gehäuseteil (102), welches zumindest einen Zusammenführungsbereich (110) nach einem der Ansprüche 10 bis 12 aufweist.

15. Montagevorrichtung (10) nach Anspruch 14, **dadurch gekennzeichnet, dass** die Gehäuseteile (100, 102) starr oder bewegbar miteinander verbunden sind.

16. Montagevorrichtung (10) nach einem der voranstehenden Ansprüche, **gekennzeichnet durch** eine Antriebseinrichtung zur Erzeugung einer längs der Leistenanordnung (18) gerichteten Relativbewegung (78, 80) zwischen Leistenanordnung (18) und Montagevorrichtung (10).

17. Verfahren zur Durchführung bei einer Leistenanordnung (18), welche eine an einem Randbereich (34) einer Fensterscheibe (36) eines Kraftfahrzeugs anordenbare oder angeordnete Profilleiste (22) und eine Transportschutzleiste (24) umfasst, wobei die Transportschutzleiste (24) zumindest mit einem Teilbereich ihres Querschnitts in einem Aufnahmebereich (40) der Profilleiste (22) angeordnet ist, **gekennzeichnet durch** das Einführen eines freien Endes der die Profilleiste (22) und die Transportschutzleiste (24) umfassenden Leistenanordnung (18) in einen Einführbereich (26) einer Montagevorrichtung (10), durch eine Relativpositionierung zwischen dem freien Ende (76) der Leistenanordnung (18) und einem Trennbereich (46) der Montagevorrichtung (10) in dem Einführbereich (26) und durch das Trennen eines freien Endes der Transportschutzleiste (24) von der Profilleiste (22) in dem Trennbereich (46).

18. Verfahren nach Anspruch 17, **gekennzeichnet durch** eine Relativbewegung (78, 80) des Einführbereichs (26) und des Trennbereichs (46) einerseits und der Leistenanordnung (18) andererseits längs der Leistenanordnung (18) zum Trennen eines sich an das freie Ende der Transportschutzleiste (24) anschließenden Abschnitts (86) der Transportschutzleiste (24) von der Profilleiste (22).

19. Verfahren nach Anspruch 18, **gekennzeichnet durch** das Führen der Profilleiste (22) entlang eines ersten Führungswegs (116), der eine erste Länge aufweist, durch das Führen eines von der Profilleiste (22) getrennten Abschnitts (86) der Transportschutzleiste (22) entlang eines zweiten Führungswegs (114), der eine von der ersten Länge verschiedene zweite Länge aufweist, und durch das Zusammenführen von Transportschutzleiste (24) und Profilleiste (22) und das Eindrücken zumindest eines Teilbereichs des Querschnitts der Transportschutzleiste (24) in den Aufnahmebereich (40) der Profilleiste (22).

20. Verfahren nach Anspruch 19, **dadurch gekennzeichnet, dass** die zweite Länge größer ist als die erste Länge.

21. Verfahren nach Anspruch 19 oder 20, **dadurch gekennzeichnet, dass** die Leistenanordnung (18), die in den Einführbereich (26) eingeführt wird,
a) zueinander bündige Enden der Profilleiste (22) und der Transportschutzleiste (24) aufweist, und dass diese Enden nach dem Eindrücken zumindest eines Teilbereichs des Querschnitts der Transportschutzleiste (24) in den Aufnahmebereich (40) der Profilleiste (22) um ein Längenmaß (118) versetzt sind, das der Differenz der Längen der Führungswege (116, 114) entspricht, oder
b) relativ zueinander um ein erstes Längenmaß versetzte Enden der Profilleiste (22) und der Transportschutzleiste (24) aufweist, und dass diese Enden nach dem Eindrücken zumindest eines Teilbereichs des Querschnitts der Transportschutzleiste (24) in den Aufnahmebereich (40) der Profilleiste (22) um ein von dem ersten Längenmaß verschiedenes zweites Längenmaß versetzt sind, wobei der Betrag der Differenz zwischen dem ersten Längenmaß und dem zweiten Längenmaß der Differenz der Längen der Führungswege (116, 114) entspricht.

22. Verwendung einer Montagevorrichtung (10) nach einem der Ansprüche 1 bis 16 zur Durchführung eines Verfahrens nach einem der Ansprüche 17 bis 21.

## Claims

1. A mounting device (10) to be used with a strip arrangement (18), the strip arrangement (18) comprising a profile strip (22) arrangeable or arranged at an edge area (34) of a windowpane (36) of a motor vehicle and comprising a transport protection strip (24), wherein the transport protection strip (24) is arranged at least with a portion of its cross section in a receiving area (40) of the profile strip (22), **characterized in that** the mounting device (10) has a guide-in area (26) for a free end (76) of the strip arrangement (18), which strip arrangement (18) comprises the profile strip (22) and the transport protection strip (24), to be guided into the mounting device (10), and has a separation area (46) for the transport protection strip (24) to be separated from the profile strip (22), wherein the guide-in area (26) enables a relative positioning between the free end (76) of the strip arrangement (18) and the separation area (46).

2. The mounting device (10) according to claim 1, **characterized in that** the guide-in area (26) has a guide-in profile (28) that is at least in sections complementary to the cross section of the strip arrangement (18).

3. The mounting device (10) according to claim 2, **characterized in that** the guide-in profile (28) is circumferentially closed or has a guide-in profile opening (30) in which the edge area (34) of the windowpane (36) is arrangeable.

4. The mounting device (10) according to claim 2 or 3, **characterized in that** the guide-in profile (28) is delimited by wall sections of a housing (12) of the mounting device (10) and/or by preferably friction-reducing guide sections and/or drive sections.

5. The mounting device (10) according to one of the preceding claims, **characterized in that** the separation area (46) has a lifting means (48) with a ramp section (56) that at least in sections reaches underneath the transport protection strip (24) and lifts it out of the receiving area (40) of the profile strip (22).

6. The mounting device (10) according to claim 5, **characterized in that** the ramp section (56) is formed by a section (104) of a housing, or of the housing (12), of the mounting device and/or by an in particular blade-shaped additional element (50).

7. The mounting device (10) according to one of the preceding claims, **characterized by** a profile strip guide-out area (66) and/or by a transport protection strip guide-out area (72).

8. The mounting device (10) according to claim 7, **characterized in that** the profile strip guide-out area (66) and/or the transport protection strip guide-out area (72) is or are terminally open.

9. The mounting device (10) according to one of the preceding claims, **characterized in that** the profile strip guide-out area (66) and/or the transport protection strip guide-out area (72) is or are terminally closed.

10. The mounting device (10) according to one of the claims 1 to 9, having a merge area (110) for a section (86) of the transport protection strip (24), which section (86) is separate from the receiving area (40) of the profile strip (22), to be merged with the profile strip (22).

11. The mounting device (10) according to claim 10, **characterized in that** a press-in section (112) is provided in the merge area (110), the press-in section (112) pressing the transport protection strip (24) at least with a portion of its cross section into the receiving area (40) of the profile strip (22).

12. The mounting device (10) according to claim 11, **characterized in that** the press-in section (112) is formed by a section of a housing (12) of the mounting device (10) and/or by an in particular block-shaped or roll-shaped additional element.

13. The mounting device (10) according to one of the preceding claims, **characterized in that** the mounting device has a one-piece housing (12).

14. The mounting device (10) according to one of the claims 1 to 12, **characterized in that** the mounting device (10) has a multi-piece housing (12), wherein the housing (12) comprises a first housing part (100) having at least the guide-in area (26) and the separation area (46) and comprises a second housing part (102) having at least one merge area (110) according to one of the claims 10 to 12.

15. The mounting device (10) according to claim 14, **characterized in that** the housing parts (100, 102) are rigidly or movably connected to each other.

16. The mounting device (10) according to one of the preceding claims, **characterized by** a drive means to generate a relative movement (78, 80) between strip arrangement (18) and mounting device (10), the relative movement being directed along the strip arrangement (18).

17. A method to be carried out with a strip arrangement (18), which comprises a profile strip (22) arrangeable or arranged at an edge area (34) of a windowpane (36) of a motor vehicle and comprises a transport protection strip (24), wherein the transport protection strip (24) is arranged at least with a portion of its cross section in a receiving area (40) of the profile strip (22), **characterized by** a free end of the strip arrangement (18), which strip arrangement (18) comprises the profile strip (22) and the transport protection strip (24), being guided into a guide-in area (26) of a mounting device (10), by a relative positioning between the free end (76) of the strip arrangement (18) and a separation area (46) of the mounting device (10) in the guide-in area (26), and by a free end of the transport protection strip (24) being separated from the profile strip (22) in the separation area (46) of the mounting device (10).

18. The method according to claim 17, **characterized by** a relative movement (78, 80) along the strip arrangement (18) of the guide-in area (26) and the separation area (46) on the one hand and of the strip arrangement (18) on the other hand, to separate a section (86) of the transport protection strip (24), which section (86) is adjacent to the free end of the transport protection strip (24), from the profile strip (22).

19. The method according to claim 18, **characterized by** the profile strip (22) being guided along a first guide path (116), which has a first length, by a section (86) of the transport protection strip (24), which section (86) is separate from the profile strip (22), being guided along a second guide path (114), which has a second length that is different from the first length, and by the transport protection strip (24) and the profile strip (22) being merged, and by at least a portion of the cross section of the transport protection strip (24) being pressed into the receiving area (40) of the profile strip (22).

20. The method according to claim 19, **characterized in that** the second length is greater than the first length.

21. The method according to claim 19 or 20, **characterized in that** the strip arrangement (18) that is guided into the guide-in area (26)
a) has ends of the profile strip (22) and of the transport protection strip (24) that are flush with each other, and **in that** these ends, after at least a portion of the cross section of the transport protection strip (24) has been pressed into the receiving area (40) of the profile strip (22), are offset by a measure of length (118) corresponding to the difference of the lengths of the guide paths (116, 114), or
b) has ends of the profile strip (22) and of the transport protection strip (24) that are offset relative to each other by a first measure of length, and **in that** these ends, after at least a portion of the cross section of the transport protection strip (24) has been pressed into the receiving area (40) of the profile strip (22), are offset by a second measure of length that is different from the first measure of length, wherein the value of the difference between the first measure of length and the second measure of length corresponds to the difference of the lengths of the guide paths (116, 114).

22. The use of a mounting device (10) according to one of the claims 1 to 16 to carry out a method according to one of the claims 17 to 21.

## Revendications

1. Dispositif de montage (10) destiné à être utilisé dans un ensemble de baguettes (18) qui comprend une baguette profilée (22) apte à être disposée ou disposée sur une zone de bord (34) d'une vitre de fenêtre (36) d'un véhicule automobile ainsi qu'une baguette de protection de transport (24), dans lequel la baguette de protection de transport (24) est disposée, au moins par une zone partielle de sa section transversale, dans une zone de logement (40) de la baguette profilée (22), **caractérisé par le fait que** le dispositif de montage (10) présente une zone d'introduction (26) destinée à introduire, dans le dispositif de montage (10), une extrémité libre (76) dudit ensemble de baguettes (18) comprenant la baguette profilée (22) et la baguette de protection de transport (24), ainsi qu'une zone de séparation (46) destinée à séparer la baguette de protection de transport (24) et la baguette profilée (22), dans lequel ladite zone d'introduction (26) permet un positionnement relatif entre l'extrémité libre (76) de l'ensemble de baguettes (18) et la zone de séparation (46).

2. Dispositif de montage (10) selon la revendication 1, **caractérisé par le fait que** la zone d'introduction (26) présente un profilé d'introduction (28) qui est complémentaire, au moins par sections, de la section transversale de l'ensemble de baguettes (18).

3. Dispositif de montage (10) selon la revendication 2, **caractérisé par le fait que** le profilé d'introduction (28) est fermé sur la circonférence ou présente une ouverture de profilé d'introduction (30) dans laquelle peut être disposée la zone de bord (34) de la vitre de fenêtre (36).

4. Dispositif de montage (10) selon la revendication 2 ou 3, **caractérisé par le fait que** le profilé d'introduction (28) est délimité par des portions de paroi d'un boîtier (12) du dispositif de montage (10) et/ou, de préférence, par des sections de guidage et/ou d'entraînement réduisant le frottement.

5. Dispositif de montage (10) selon l'une quelconque des revendications précédentes, **caractérisé par le fait que** la zone de séparation (46) comprend un dispositif de levage (48) ayant une portion de rampe (56) qui s'engage, au moins par sections, sous la baguette de protection de transport (24) et fait sortir celle-ci de la zone de logement (40) de la baguette profilée (22).

6. Dispositif de montage (10) selon la revendication 5, **caractérisé par le fait que** la portion de rampe (56) est formée par une portion (104) d'un ou dudit boîtier (12) du dispositif de montage et/ou par un élément supplémentaire (50) en particulier en forme de lame.

7. Dispositif de montage (10) selon l'une quelconque des revendications précédentes, **caractérisé par** une zone de sortie de baguette profilée (66) et/ou par une zone de sortie de baguette de protection de transport (72).

8. Dispositif de montage (10) selon la revendication 7, **caractérisé par le fait que** ladite zone de sortie de baguette profilée (66) et/ou ladite zone de sortie de baguette de protection de transport (72) est ou sont ouverte(s) aux extrémités.

9. Dispositif de montage (10) selon l'une quelconque des revendications précédentes, **caractérisé par le fait que** ladite zone de sortie de baguette profilée (66) et/ou ladite zone de sortie de baguette de protection de transport (72) est ou sont fermée(s) aux extrémités.

10. Dispositif de montage (10) selon l'une quelconque des revendications 1 à 9, comprenant une zone de jonction (110) pour réunir une portion (86) de la baguette de protection de transport (24) et de la baguette profilée (22), qui est séparée de la zone de logement (40) de la baguette profilée (22).

11. Dispositif de montage (10) selon la revendication 10, **caractérisé par le fait qu'**une portion destinée à faire entrer par pression (112) est prévue dans ladite zone de jonction (110), qui sert à faire entrer par pression la baguette de protection de transport (24), au moins par une zone partielle de sa section transversale, dans la zone de logement (40) de la baguette profilée (22).

12. Dispositif de montage (10) selon la revendication 11, **caractérisé par le fait que** ladite portion destinée à faire entrer par pression (112) est formée par une portion d'un boîtier (12) du dispositif de montage (10) et/ou par un élément supplémentaire en particulier en forme de bloc ou de rouleau.

13. Dispositif de montage (10) selon l'une quelconque des revendications précédentes, **caractérisé par le fait que** le dispositif de montage comprend un boîtier (12) monobloc.

14. Dispositif de montage (10) selon l'une quelconque des revendications 1 à 12, **caractérisé par le fait que** le dispositif de montage (10) comprend un boîtier (12) en plusieurs parties, dans lequel ledit boîtier (12) comprend une première partie de boîtier (100) qui présente au moins la zone d'introduction (26) et la zone de séparation (46), ainsi qu'une deuxième partie de boîtier (102) qui comprend au moins une zone de jonction (110) selon l'une quelconque des revendications 10 à 12.

15. Dispositif de montage (10) selon la revendication 14, **caractérisé par le fait que** les parties de boîtier (100, 102) sont reliées entre elles de manière rigide ou mobile.

16. Dispositif de montage (10) selon l'une quelconque des revendications précédentes, **caractérisé par** un dispositif d'entraînement pour générer un mouvement relatif (78, 80) dirigé le long de l'ensemble de baguettes (18), entre l'ensemble de baguettes (18) et le dispositif de montage (10) .

17. Procédé pour être mis en oeuvre dans un ensemble de baguettes (18) qui comprend une baguette profilée (22) apte à être disposée ou disposée sur une zone de bord (34) d'une vitre de fenêtre (36) d'un véhicule automobile ainsi qu'une baguette de protection de transport (24), dans lequel la baguette de protection de transport (24) est disposée, au moins par une zone partielle de sa section transversale, dans une zone de logement (40) de la baguette profilée (22), **caractérisé par** l'introduction d'une extrémité libre dudit ensemble de baguettes (18) comprenant la baguette profilée (22) et la baguette de protection de transport (24), dans une zone d'introduction (26) d'un dispositif de montage (10), par un positionnement relatif entre ladite extrémité libre (76) de l'ensemble de baguettes (18) et une zone de séparation (46) du dispositif de montage (10) dans la zone d'introduction (26), et par la séparation d'une extrémité libre de la baguette de protection de transport (24) et de la baguette profilée (22) dans la zone de séparation (46).

18. Procédé selon la revendication 17, **caractérisé par** un mouvement relatif (78, 80) de la zone d'introduction (26) et de la zone de séparation (46) d'une part et de l'ensemble de baguettes (18) d'autre part, le long de l'ensemble de baguettes (18) pour séparer, de la baguette profilée (22), une portion (86) de la baguette de protection de transport (24), qui est contiguë à l'extrémité libre de baguette de protection de transport (24) .

19. Procédé selon la revendication 18, **caractérisé par** le guidage de la baguette profilée (22) le long d'un premier chemin de guidage (116) qui présente une première longueur, par le guidage d'une portion (86) de la baguette de protection de transport (24), qui est séparée de la baguette profilée (22), le long d'un deuxième chemin de guidage (114) qui présente une deuxième longueur différente de la première longueur, et par l'action de réunir la baguette de protection de transport (24) et la baguette profilée (22) et par l'action de faire entrer par pression au moins une zone partielle de la section transversale de la baguette de protection de transport (24) dans la zone de logement (40) de la baguette profilée (22).

20. Procédé selon la revendication 19, **caractérisé par le fait que** la deuxième longueur est supérieure à la première longueur.

21. Procédé selon la revendication 19 ou 20, **caractérisé par le fait que** l'ensemble de baguettes (18) qui est introduit dans la zone d'introduction (26),
a) présente des extrémités de la baguette profilée (22) et de la baguette de protection de transport (24), qui sont à fleur l'une de l'autre, et que, après avoir engagé par pression au moins une zone partielle de la section transversale de la baguette de protection de transport (24) dans la zone de logement (40) de la baguette profilée (22), ces extrémités sont décalées d'une mesure de longueur (118) qui correspond à la différence des longueurs des chemins de guidage (116, 114), ou
b) présente des extrémités de la baguette profilée (22) et de la baguette de protection de transport (24), qui sont décalées l'une par rapport à l'autre d'une première mesure de longueur, et que, après avoir engagé par pression au moins une zone partielle de la section transversale de la baguette de protection de transport (24) dans la zone de logement (40) de la baguette profilée (22), ces extrémités sont décalées d'une deuxième mesure de longueur différente de la première mesure de longueur, la valeur absolue de la différence entre la première mesure de longueur et la deuxième mesure de longueur correspondant à la différence des longueurs des chemins de guidage (116, 114).

22. Utilisation d'un dispositif de montage (10) selon l'une des revendications 1 à 16, pour la mise en oeuvre d'un procédé selon l'une quelconque des revendications 17 à 21.
